# EUROPÄISCHE PATENTSCHRIFT

(11) **EP 1 857 213 B1**
(45) Veröffentlichungstag und Bekanntmachung des Hinweises auf die Patenterteilung: **16.12.2009**
(21) Anmeldenummer: 07105724.4
(22) Anmeldetag: 05.04.2007
(51) Int. Cl.: B23K 1/00, B23K 35/00, B23K 35/30, C21D 1/18, F02M 61/16

(54) **Verfahren zum Herstellen eines Körpers**
Method for manufacturing a body
Procédé de fabrication d'un corps

(30) Priorität: 15.05.2006 DE 102006022601
(43) Veröffentlichungstag der Anmeldung: 21.11.2007
(73) Patentinhaber: Continental Automotive GmbH, 30165 Hannover (DE)
(72) Erfinder: Anzinger, Claus, 93073, Neutraubling (DE); Schürz, Willibald, 93188, Pielenhofen (DE); Simmet, Martin, 93077, Bad Abbach (DE)

(56) Entgegenhaltungen:
- EP-A- 1 439 434
- GB-A- 1 203 948
- GB-A- 2 407 054
- US-A- 4 379 961

## Beschreibung

Die Erfindung betrifft ein Verfahren zum Herstellen eines Körpers wie es in dem Anspruch 1 beansprucht ist, der ein erstes metallisches Körperteil und ein zweites metallisches Körperteil umfasst. Der Körper kann beispielsweise ein Düsenkörper sein, der bevorzugt für Injektoren von Brennkraftmaschinen eingesetzt wird. Insbesondere, wenn der Körper, wie beispielsweise im Falle eines Düsenkörpers, in Teilbereichen eine sehr hohe Härte aufweisen soll und er andererseits in anderen Teilbereichen gut schweißbar sein soll, ist häufig die Ausbildung des Körpers aus einem einzigen Material kritisch, da dies gegebenenfalls nicht allen Anforderungen ausreichend gerecht werden kann. So sind typischerweise Stähle mit einem hohen Kohlenstoffanteil sehr gut geeignet zum Härten, während sie zum Schweißen weniger geeignet sind.

Aus der US 4,379,961 ist ein Verfahren zum Herstellen einer Vorrichtung bekannt, bei dem ein dünnes Rohr für ein Ringelement mit einer Schicht einer Legierung von Phosphor und Nickel beschichtet wird im Bereich eines Ringelements und das Ringelement in das rohrförmige Element eingebracht wird und aneinandergepresst wird. Das rohrförmige Element und das Ringelement werden mit einem elektrischen Strom beaufschlagt, um Hitze zum Zusammenfügen der Elemente zur Verfügung zu stellen, wobei die so erzeugte Hitze konzentriert ist in der Schicht der Legierung, die eine deutlich höhere Temperatur als die rohrförmigen und ringförmigen Elemente dann aufweisen.

Aus der GB 2407054 A ist es bekannt, pastenförmiges Lotmaterial durch Mischen eines hochmolekularen organischen Binders und einem Legierungspuder zu formen, das Nickel und Phosphor umfasst und dessen Schmelzpunkt bei ungefähr 600° liegt. Das Lötmaterial wird auf Kupferelemente zum Löten aufgebracht.

Aus der GB 1203948 ist ein Verfahren bekannt, bei dem zwischen zwei Schichten von magnetischem Material eine isolierende Beschichtung aufgebracht wird mittels eines dünnen Kupfermaterials und seine nachfolgende nasschemische Oxidation durchgeführt wird.

Aus der EP 1439434 A1 ist es ebenfalls bekannt, zum Löten ein Material einzusetzen, das Nickel und Phosphor umfasst.

Die Aufgabe der Erfindung ist es, ein Verfahren zum Herstellen eines Körpers zu schaffen, das einfach ist.

Die Aufgabe wird gelöst durch die Merkmale des unabhängigen Patentanspruchs. Vorteilhafte Ausgestaltungen der Erfindung sind in den Unteransprüchen gekennzeichnet.

Die Erfindung zeichnet sich aus durch ein Verfahren zum Herstellen eines Körpers umfassend mindestens ein erstes metallisches Körperteil und mindestens ein zweites metallisches Körperteil mit folgenden Schritten. Das erste Körperteil wird mit einer Nickel-Phosphor Schicht beschichtet. Eine derartige Schicht kann in einem Herstellungsprozess sehr einfach aufgetragen werden und zwar auch in einer geeigneten Schichtdicke. Die Nickel-Phosphor Schicht zeichnet sich aus durch eine gute Hafteigenschaft an dem metallischen ersten Körperteil und ist insbesondere aufgrund des Nickels sehr gut geeignet als Hartlot zum Herstellen einer Hartlötverbindung. Durch den Phosphoranteil in der Nickel-Phosphor Schicht kann das Schichtwachstum während des Beschichtens besonders gut eingestellt werden. Durch den Phosphoranteil in der Nickel-Phosphor Schicht kann ferner der Schmelzpunkt und die Fließeigenschaften des Hartlots sehr gut eingestellt werden. Im Anschluss an das Beschichten des ersten Körperteils werden die ersten und zweiten Körperteile miteinander montiert. So kann beispielsweise das zweite Körperteil in einer Ausnehmung des ersten Körperteils angeordnet werden. Anschließend werden das erste und zweite Körperteil derart erwärmt, dass durch die Nickel-Phosphor Schicht eine Lötverbindung zwischen dem ersten und zweiten Körperteil entsteht. Auf diese Weise können das erste und zweite Körperteil dann beispielsweise dicht, insbesondere hochdruckdicht, miteinander verbunden sein.

Die Materialwahl des ersten metallischen Körperteils und des zweiten metallischen Körperteils kann im Wesentlichen unabhängig voneinander erfolgen und im Hinblick auf gewünschte Materialeigenschaften des jeweiligen Körperteils optimiert sein.

Das Beschichten des ersten Körperteils erfolgt mit einer Nickel-Phosphor Schicht auf nasschemischem Wege. Auf diese Weise ist der Prozess des Beschichtens besonders einfach und präzise steuerbar und somit sehr kostengünstig ausführbar. Das Beschichten des ersten Körperteils mit einer Nickel-Phosphor Schicht auf nasschemischem Wege erfolgt bevorzugt im Wege einer autokatalytisch abgeschiedenen Schicht.

Grundsätzlich kann auch sowohl das erste metallische Körperteil als auch das zweite metallische Körperteil mit der Nickel-Phosphor Schicht beschichtet werden.

Das Beschichten auf dem nasschemischen Weg kann bevorzugt in einem Beschichtungsbad erfolgen. Besonders bevorzugt erfolgt das Beschichten des ersten Körperteils zusammen mit weiteren ersten Körperteilen in dem Beschichtungsbad. Auf diese Weisekönnen gleichzeitig - und zwar unter den gleichen Prozessbedingungen - mehrere erste Körperteile mit der Nickel-Phosphor Schicht versehen werden und somit besonders kostengünstig und dennoch präzise beschichtet werden. Bevorzugt werden die ersten Körperteile in diesem Zusammenhang als Schüttgut in das Beschichtungsbad eingebracht. In diesem Zusammenhang kann es dann ausreichend sein, lediglich einzelne erste Körperteile, insbesondere nur ein einziges erstes Körperteil, am Ende des Beschichtungsvorgangs auf die Güte der Nickel-Phosphor Schicht, insbesondere ihre Schichtdicke zu überprüfen, die dann repräsentativ ist für diejenigen der anderen ersten Körperteile. '

Gemäß einer vorteilhaften Ausgestaltung des Verfahrens umfasst zumindest eines der ersten und zweiten Körperteile ein härtbares Metall. Das Erwärmen des ersten und zweiten Körperteils erfolgt derart, dass ein Härten des ersten beziehungsweise zweiten Körperteils erfolgt unter Erreichen einer Härttemperatur. Dies hat den Vorteil, dass das Hartlöten in einem gleichen Vorgang mit dem Härten erfolgt, und somit die Härte des zu härtenden Körperteils nicht durch den Hartlötvorgang reduziert wird.

Gemäß einer weiteren vorteilhaften Ausgestaltung enthält die Nickel-Phosphor Schicht zwischen acht und zwölf Gewichtsprozent Phosphor. Diesbezüglich hat sich gezeigt, dass einerseits eine besonders günstige Schichtabscheidungsgeschwindigkeit während des Beschichtens erreicht werden kann und andererseits die Lötfähigkeit der Nickel-Phosphor Schicht besonders gut ist.

Gemäß einer weiteren vorteilhaften Ausgestaltung beträgt die Schmelztemperatur der Nickel-Phosphor Schicht zwischen 850 und 1050 Grad Celsius. Insbesondere im Zusammenhang mit einem erfolgenden Härtvorgang zumindest eines der ersten oder zweiten metallischen Körperteile kann so gleichzeitig eine sehr gute Lötverbindung, insbesondere Hartlötverbindung gewährleistet werden.

Ausführungsbeispiele der Erfindung sind im Folgenden anhand der schematischen Zeichnungen näher erläutert.

Es zeigen:
Figur 1 einen Düsenkörper,
Figur 2 Einzelteile des Düsenkörpers gemäß Figur 1 vor ihrer Montage und
Figur 3 ein Ablaufdiagramm eines Verfahrens zum Herstellen eines Körpers.

Ein Körper kann beispielsweise als Düsenkörper ausgebildet sein. Er umfasst ein erstes und zweites metallisches Körperteil, die beispielsweise ein erstes Düsenkörperteil 1 beziehungsweise ein zweites Düsenkörperteil 2 sein können. Der Körper kann jedoch auch ein beliebiger anderer Körper sein, der ein beliebiges erstes metallisches Körperteil und ein beliebiges zweites metallisches Körperteil umfasst. Im Folgenden wird der Körper exemplarisch anhand des Düsenkörpers näher erläutert, wobei die Ausführungen auch regelmäßig auf beliebige andere Körper anwendbar sind.

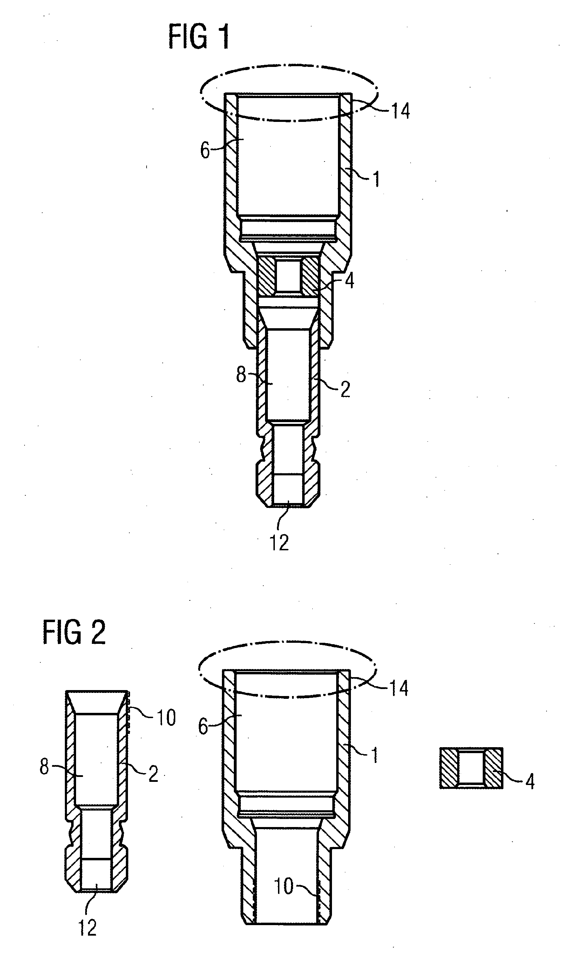

Der Düsenkörper umfasst das erste Düsenkörperteil 1 (Figur 1) und das zweite Düsenkörperteil 2 und eine Führungsbuchse 4. Das erste Düsenkörperteil 1 hat eine Ausnehmung 6, die diesen in axialer Richtung vollständig durchdringt. In die erste Ausnehmung 6 des ersten Düsenkörperteils 1 ist ein zweites Düsenkörperteil 2 eingebracht und in einem Lötbereich 10 mit diesem durch eine Haltlötverbindung verbunden. Die Führungsbuchse 4 ist ebenfalls in die Ausnehmung 6 des ersten Düsenkörperteils eingebracht und kann beispielsweise ebenfalls über eine Lötverbindung in dem ersten Düsenkörperteil 1 fixiert sein.

Das zweite Düsenkörperteil 2 hat eine Ausnehmung 8 die es axial vollständig durchdringt und die zur Aufnahme einer Düsennadel dient und die sich hin zu einer Zumessöffnung 12 erstreckt und die Zumessöffnung abhängig von der Position der Düsennadel freigibt oder verschließt mit der Folge, dass ebenfalls in der Ausnehmung 8 und gegebenenfalls der Ausnehmung 6 des ersten Düsenkörperteils 1 befindlicher Fluid abhängig davon zugemessen wird oder nicht.

Ein Schweißbereich 14 kann beispielsweise im Bereich eines axialen Endes des ersten Düsenkörperteils 1 ausgebildet sein. Ein gehärteter Bereich 16 kann beispielsweise im Bereich der Zumessöffnung 12 des zweiten Düsenkörperteils 2 ausgebildet sein. Grundsätzlich kann jedoch auch das gesamte zweite Körperteil beispielsweise gehärtet sein. In Figur 2 sind das erste und zweite Düsenkörperteil 1, 2 und die Führungsbuchse 4 vor der Montage dargestellt. Das zweite Düsenkörperteil kann beispielsweise im Wesentlichen aus einem hoch kohlenstoffhaltigen und damit gut härtbaren Chromstahl bestehen.

Das erste Düsenkörperteil ist hingegen bevorzugt aus einem gut schweißbaren Metall hergestellt. In der Führungsbuchse 4 ist die Düsennadel bevorzugt geführt.

Bevorzugt ist der Düsenkörper Bestandteil eines Injektors. Der Injektor umfasst neben dem Düsenkörper auch noch ein Injektorgehäuse an das der Düsenkörper bevorzugt mit seinem ersten Düsenkörperteil in dem Schweißbereich 14 angeschweißt ist. Der Düsenkörper umfasst ferner einen Aktor, durch den die Düsennadel direkt oder mittelbar angetrieben wird. Der Aktor kann beispielsweise ein Piezo-Aktuator sein oder auch ein beliebiger anderer für diese Zwecke bekannter Aktor. Ferner kann beispielsweise der Injektor auch noch eine Düsenspannmutter oder eine Zwischenplatte oder auch hydraulische Ausgleichselemente, einen Hubumsetzer oder eine hydraulische Kopplung zwischen dem Aktor und der Düsennadel umfassen.

Gegebenenfalls kann dem Injektor Fluid, insbesondere Kraftstoff, unter sehr hohem Druck, beispielsweise 1600 Bar, zugeführt werden.

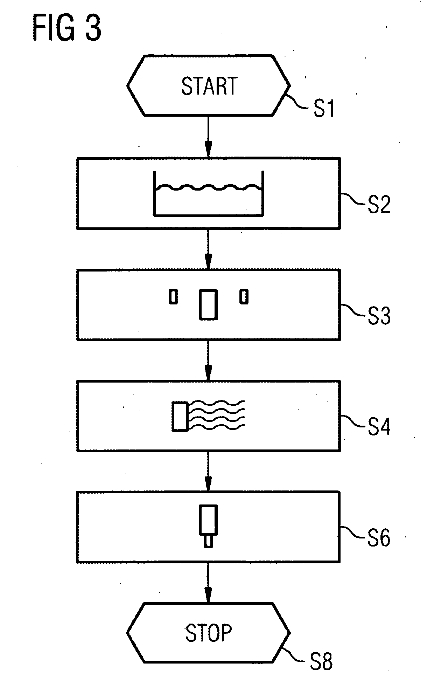

Ein Verfahren zum Herstellen des Körpers ist im Folgenden anhand des Ablaufdiagramms der Figur 3 erläutert. Konkret wird dabei als Beispiel auf den Düsenkörper Bezug genommen. Das Programm wird in einem Schritt S1 gestartet.

In einem Schritt S2 erfolgt ein Beschichten des ersten Körperteils, also beispielsweise des ersten Düsenkörperteils 1 mit einer Nickel-Phosphor Schicht. Dazu wird das erste Körperteil bevorzugt auf nasschemischen Weg beschichtet, und zwar bevorzugt in einem Beschichtungsbad. Es wird somit einem Beschichtungsbad zugeführt, in dem Nickel-Phosphor gelöst ist, das sich dann während der Verweildauer des ersten Köperteils in dem Beschichtungsbad auf dem ersten Körperteil abscheidet. Das Beschichten des ersten Körperteils mit der Nickel-Phosphor Schicht auf nasschemischem Wege erfolgt bevorzugt im Wege einer autokatalytisch abgeschiedenen Schicht.

Versuche haben gezeigt, dass der Phosphoranteil maßgeblich zu der Schichtabscheidungsgeschwindigkeit beiträgt. Es hat sich als besonders vorteilhaft erwiesen, die Nickel-Phosphor Schicht so auszubilden, dass der Phosphoranteil zwischen acht und zwölf Gewichtsprozent beträgt, besonders bevorzugt zehn Gewichtsprozent.

Besonders vorteilhaft ist auch wenn die Zusammensetzung der Nickel-Phosphor Schicht derart ist, dass ihre Schmelztemperatur zwischen 850 und 1050 Grad Celsius beträgt, also beispielsweise 1000 Grad Celsius beträgt.

Besonders kostengünstig lässt sich das Herstellungsverfahren gestalten, wenn mehrere erste Körperteile zusammen in dem Beschichtungsbad beschichtet werden. Bevorzugt werden diese als Schüttgut dem Beschichtungsbad zugeführt. Das Beschichtungsbad kann beispielsweise auch als Trommel ausgebildet sein und eine vorgegebene Dreh- oder Schwenkbewegung während des Beschichtens ausführen und so eine besonders homogene Beschichtung der ersten Körperteile gewährleisten.

Die anteilige Prozesszeit für das jeweilige Körperteil wird so sehr stark reduziert und damit auch die Herstellungskosten. Darüber hinaus kann dann die Güte der Schicht, also insbesondere die Dicke der Nickel-Phosphor Schicht an beispielsweise nur einem Prüfexemplar des ersten Körperteils überprüft werden, was im Hinblick auf die anderen ersten Körperteile besonders einfach ist und aufgrund des simultan ablaufenden Beschichtungsprozesses dennoch repräsentativ ist für die anderen ersten Körperteile.

Im Anschluss an den Schritt S2 wird dann das erste Körperteil mit dem zweiten Körperteil montiert, insbesondere wird das zweite Düsenkörperteil 2 in die Ausnehmung 6 des ersten Düsenkörperteils 1 eingebracht. Ferner wird bevorzugt auch die Führungsbuchse 4 in die Ausnehmung 6 des ersten Körperteils eingebracht. Auch die Führungsbuchse 4 kann ein erstes oder zweites Körperteil repräsentieren.

Anschließend wird der so vormontierte Düsenkörper dann in einem Schritt S4 erwärmt und zwar mit einem vorgebbaren Temperaturprofil. Falls lediglich das Erzeugen einer Lötverbindung im Lötbereich 10 während des Schrittes S4 erreicht werden soll, so wird der Düsenkörper zumindest in dem Lötbereich 10 auf mindestens die Schmelztemperatur der Nickel-Phosphor Schicht erhitzt, so dass nach Überschreiten der Schmelztemperatur eine Lötverbindung, insbesondere eine Hartlötverbindung, in dem Lötbereich 10 entsteht. Das Beschichten des ersten Körperteils mit dem lötfähigen Nickel-Phosphor hat den Vorteil, dass die Schichtdicke prozesstechnisch einfach aber dennoch sehr präzise eingestellt werden kann, was eine sehr gute Lötverbindung gewährleisten kann. Die Schichtdicke der Nickel-Phosphor Schicht vor dem Durchführen des Lötens kann beispielsweise in einem Bereich von 8 bis 20 µm liegen.

Im bevorzugten Falle des auch in dem Schritt S4 durchzuführenden Vorgangs des Härtens wird der Düsenkörper mindestens auf eine Härttemperatur des Materials des zu härtenden Bereichs erhitzt. Die Härttemperatur kann beispielsweise bei etwas über 1000 Grad Celsius liegen. Zum Durchführen des Härtens wird ein vorgegebenes Temperatur- oder Wärmeprofil dem Düsenkörper aufgeprägt. Der Vorteil ist, dass im Rahmen des Härtvorgangs aufgrund der Eigenschaften der Nickel-Phosphor Schicht auch deren Schmelztemperatur überschritten wird und somit der Lötvorgang erfolgt.

Der Schritt S4 wird bevorzugt in einem Vakuum-Ofen durchgeführt. Falls das Härten in dem Schritt S4 durchgeführt wird, erfolgt im Anschluss an das Erreichen der Härttemperatur erfolgt bevorzugt eine schnelle Temperaturrücknahme.

In einem Schritt S5 kann dann der Düsenköper gegebenenfalls noch weiter bearbeitet werden oder in den Injektor montiert werden. In einem Schritt S8 wird das Verfahren dann beendet.

## Patentansprüche

1. Verfahren zum Herstellen eines Körpers umfassend mindestens ein erstes metallisches Körperteil und ein zweites metallisches Körperteil mit folgenden Schritten:
- Beschichten des ersten Körperteils mit einer Nickel-Phosphor Schicht auf nasschemischem Wege,
- Montieren des ersten und zweiten Körperteils,
- Erwärmen des ersten und zweiten Körperteils derart, dass durch die Nickel-Phosphor Schicht eine Lötverbindung zwischen dem ersten und zweiten Körperteil entsteht.

2. Verfahren nach Anspruch 1 bei dem zumindest eines der ersten und zweiten Körperteile ein härtbares Metall umfasst und das Erwärmen des ersten und zweiten Körperteils derart erfolgt, dass ein Härten des ersten beziehungsweise des zweiten Körperteils erfolgt unter Erreichen einer Härttemperatur.

3. Verfahren nach Anspruch 3, bei dem das Beschichten des ersten Körperteils zusammen mit weiteren Körperteilen in einem Beschichtungsbad erfolgt.

4. Verfahren nach einem der vorstehenden Ansprüche, bei dem die Nickel-Phosphor Schicht zwischen acht und zwölf Gewichtsprozent Phosphor enthält.

5. Verfahren nach einem der vorstehenden Ansprüche, bei dem die Schmelztemperatur der Nickel-Phosphor Schicht zwischen 850 und 1050 Grad Celsius beträgt.

## Claims

1. Method for manufacturing a body comprising at least one first metallic body part and one second metallic body part, said method comprising the following steps:
- coating the first body part with a nickel-phosphor layer using a wet-chemical process,
- assembling the first and second body parts,
- heating the first and second body parts such that a soldered connection is produced between the first and second body part as a result of the nickel-phosphor layer.

2. Method according to claim 1, wherein at least one of the first and second body parts comprises a hardenable, temperable metal and the first and second body parts are heated such that a hardening of the first or, as the case may be, second body part takes place when a hardening temperature is reached.

3. Method according to claim 3, wherein the first body part is coated together with further body parts in a coating bath.

4. Method according to one of the preceding claims, wherein the nickel-phosphor layer contains between eight and twelve percent by weight of phosphor.

5. Method according to one of the preceding claims, wherein the melting temperature of the nickel-phosphor layer is between 850 and 1050 degrees Celsius.

## Revendications

1. Procédé de fabrication d'un corps qui comprend au moins une première partie métallique de corps et une deuxième partie métallique de corps, ce procédé présentant les étapes suivantes :
- recouvrir par voie chimique humide la première partie de corps d'une couche en nickel-phosphore,
- assembler la première partie de corps et la deuxième partie de corps,
- échauffer la première partie de corps et la deuxième partie de corps de telle manière que, grâce à la couche en nickel-phosphore, il se forme une soudure entre la première partie de corps et la deuxième partie de corps.

2. Procédé selon la revendication 1, dans lequel au moins l'une des première et deuxième parties de corps comprend un métal apte à la trempe que l'échauffement des première et deuxième parties de corps est réalisé de telle manière qu'il se produise une trempe de la première partie de corps, respectivement de la deuxième partie de corps, en atteignant une température de trempe.

3. Procédé selon la revendication 3, au cours duquel le recouvrement de la première partie de corps est réalisé simultanément avec d'autres parties de corps dans un bain de recouvrement.

4. Procédé selon l'une des revendications précédentes, dans lequel la couche en nickel-phosphore contient un pourcentage en poids de phosphore situé entre huit et douze.

5. Procédé selon l'une des revendications précédentes, dans lequel, la température de fusion de la couche en nickel-phosphore est située entre 850 et 1050 °C.
